Europäisches Patentamt

European Patent Office

Office européen des brevets

(11) Numéro de publication: **0 337 878**
**A1**

## (12) DEMANDE DE BREVET EUROPEEN

(21) Numéro de dépôt: **89401003.2**

(22) Date de dépôt: **12.04.89**

(51) Int. Cl.⁴: **G 01 M 3/32**
G 21 F 7/04

(30) Priorité: **15.04.88 FR 8805014**

(43) Date de publication de la demande:
**18.10.89 Bulletin 89/42**

(84) Etats contractants désignés: **BE DE GB IT**

(71) Demandeur: **COMMISSARIAT A L'ENERGIE ATOMIQUE
31/33, rue de la Fédération
F-75015 Paris (FR)**

(72) Inventeur: **Giroux, Jacques
2, rue de Gavanière
F-38120 Saint Egreve (FR)**

(74) Mandataire: **Mongrédien, André et al
c/o BREVATOME 25, rue de Ponthieu
F-75008 Paris (FR)**

(54) Procédé et dispositif de mesure du débit de fuite d'une enceinte de confinement.

(57) Procédé et dispositif de mesure du débit de fuite d'une enceinte de confinement (1) quasi étanche.

La mesure consiste à faire varier le volume (18) d'une cavité communiquant avec l'enceinte (1) pour retrouver la valeur primitive d'une différence de pression entre l'enceinte (1) et l'extérieur. Des thermomètres (8) et un baromètre (9) permettent d'intégrer les variations des paramètres extérieurs à la mesure.

Application à l'industrie nucléaire.

EP 0 337 878 A1

# Description

## PROCEDE ET DISPOSITIF DE MESURE DU DEBIT DE FUITE D'UNE ENCEINTE DE CONFINEMENT

La présente invention se rapporte à un procédé et à un dispositif de mesure du débit de fuite d'une enceinte de confinement, qui peut être en dépression ou en surpression par rapport au milieu extérieur.

De telles enceintes se rencontrent notamment dans l'industrie nucléaire et peuvent être de volumes très variés. Des enceintes de quelques centaines de litres sont utilisées pour contenir des objets ou éléments radioactifs et sont le plus souvent pourvues d'un hublot et de gants pour la manipulation des objets ; d'autres, de contenance beaucoup plus importante, entourent les réacteurs nucléaires d'une enveloppe étanche en béton. Quel que soit le type des enceintes, leur étanchéité n'est jamais absolue : on assiste à des fuites soit vers l'extérieur, soit vers l'intérieur selon le cas.

Des normes répartissent les enceintes en diverses classes selon leur taux de fuite. Ce taux est égal au rapport entre le débit de fuite et le volume de l'enceinte et s'exprime donc en inverse d'unités de temps. Des essais périodiques permettent de vérifier la conformité aux normes.

Une méthode de contrôle déjà connue consiste à suivre l'évolution de la différence de pression entre l'enceinte et l'extérieur. Elle est longue à exploiter et est donc très sujette aux erreurs engendrées par le changement des conditions de températures et de pression atmosphérique.

Une autre méthode spécifique aux enceintes en dépression consiste à introduire un gaz neutre dans l'enceinte et à mesurer la remontée du taux d'oxygène en fonction du temps. Les résultats sont satisfaisants mais un appareillage spécial est requis.

Une dernière méthode consiste à mesurer la quantité de gaz nécessaire pour compenser les fuites par des moyens mécaniques tels qu'un débitmètre, mais les résultats ne sont acceptables que pour des enceintes à fuites importantes.

L'invention concerne au contraire une méthode de mesure à dépression ou surpression constante et un dispositif simple, dont l'emploi est également simple et qui permet en outre de pouvoir, si nécessaire, tenir compte aisément des variations de température et de pression, et ceci quel que soit le type d'enceinte : en dépression ou en surpression. C'est pourquoi, pour simplifier, on ne parlera plus désormais que de "fuites", sans considération de leur sens.

Le dispositif de mesure du débit de fuite comprend une cavité de volume variable et petit par rapport au volume de l'enceinte. La cavité communique avec l'enceinte et uniquement avec elle. On lui adjoint un dispositif pour la mesure de son volume ; un manomètre mesure par ailleurs la différence de pression entre l'enceinte et le milieu extérieur.

La cavité est avantageusement délimitée par une paroi cylindrique et une paroi d'extrémité coulissant dans la paroi cylindrique. On peut encore adjoindre au dispositif un ou des thermomètres pour mesurer de façon précise la température dans l'enceinte et un appareil de mesure de pression, dans ou hors de l'enceinte.

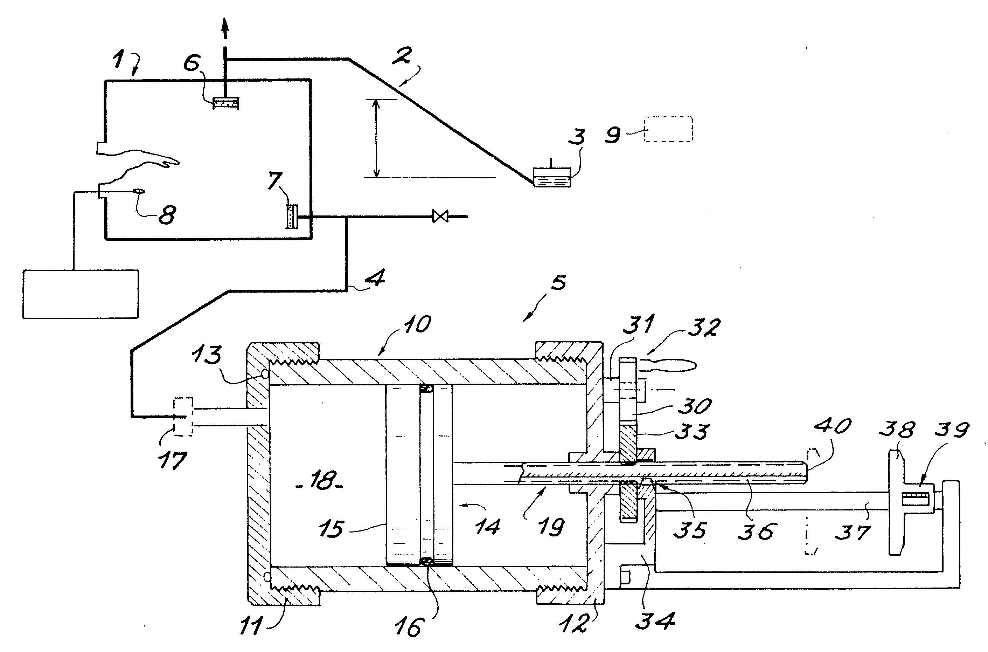

Une réalisation de l'invention va à présent être décrite de manière non limitative avec la figure unique annexée.

On désigne par 1 l'enceinte de confinement dont il faut mesurer le taux de fuite. Cette enceinte peut être selon sa finalité pourvue d'accessoires tels que des ronds de gant. Deux conduits sortent de l'enceinte 1 : le premier conduit 2 aboutit à un micromanomètre 3 qui mesure donc la différence de pression entre l'enceinte 1 et le milieu extérieur, différence de pression qui peut être positive ou négative et qui lors de la mesure, doit rester constante malgré les fuites et les perturbations dues aux variations de températures et de pression atmosphérique . Le second conduit 4 aboutit à un dispositif 5 constitutif de l'invention. Des filtres 6 et 7 sont placés aux extrémités des conduits 2 et 4 qui débouchent dans l'enceinte 1. Par ailleurs, pour tenir compte des variations de températures dans l'enceinte 1 lors de l'essai, on y prévoit un thermomètre à haute précision 8. Si le volume de l'enceinte 1 n'est pas à température homogène, par exemple s'il est partiellement exposé à la lumière solaire, plusieurs thermomètres peuvent évidemment être ajoutés pour obtenir autant que possible la température moyenne.

Le dispositif 5 comprend une paroi cylindrique 10 aux extrémités de laquelle sont vissés deux couvercles 11 et 12. Un joint d'étanchéité 13 est placé entre la paroi cylindrique 10 et le premier couvercle 11. Un piston 14 coulisse par ailleurs dans la paroi cylindrique 10 ; la tête du piston 15 constitue une paroi mobile qui permet de faire varier le volume 18 compris entre cette tête 15, le premier couvercle 11 et la paroi cylindrique 10. Un joint d'étanchéité 16 est placé à la périphérie du piston 14 et frotte sur la surface interne de la paroi cylindrique 10. Un raccordement 17 permet de relier le conduit 4 au volume variable 18 qui constitue la cavité de mesure.

Le piston 14 comprend également une tige filetée 19 qui dépasse de la paroi cylindrique 10 par un trou percé dans le second couvercle 12.

Un pignon 30 tournant autour d'un axe 31, à l'aide d'une poignée 32 entraîne en rotation une roue dentée 33 engagée sur la tige 19. La roue dentée 33 est maintenue latéralement par rapport au couvercle 12 à l'aide d'un bâti 34. Quand on agit sur la poignée 32, la rotation de la roue dentée 33 fait coulisser la tige filetée 19, qui est maintenue fixe en rotation, par une rainure longitudinale 36 dans laquelle pénètre un ergot 35 lié au bâti 34.

Une réglette graduée 37, parallèle à la tige filetée 19 et le long de laquelle glisse une jauge 38, est également liée au bâti 34. La jauge 38 est munie d'une réglette mobile 39 pour constituer un vernier avec la réglette graduée 37. Pour effectuer une mesure, on fait toucher la jauge 38 contre l'extrémité 40 de la tige filetée 19 du piston 14.

La mesure d'un débit de fuite nécessite de partir d'une position d'origine du piston 14, dûment repérée par la jauge 38, et de faire coulisser le piston 14 dans la paroi cylindrique 10 de façon à maintenir l'indication du micromanomètre 3 qui avait été relevée à l'origine. La jauge 38 permet alors de déterminer le déplacement du piston 14, c'est-à-dire la variation du volume 18. Cette variation, divisée par le temps qu'il a fallu pour la produire, donne le débit de fuite de l'enceinte 1.

Cette méthode est rigoureuse si la température à l'intérieur de l'enceinte 1 ainsi que la pression atmosphérique et celle de l'enceinte restent constantes. Dans le cas contraire, il faut en tenir compte et affecter le volume mesuré de termes correcteurs égaux au produit du volume total (volume de l'enceinte 1 et volume variable 18) par les variations relatives de température et de pression. Ces variations sont données par le ou les thermomètres 8 ainsi que par un baromètre de précision 9 situé hors de l'enceinte 1. Comme la différence de pression entre l'enceinte et l'extérieur est identique à chaque relevé, on peut aussi bien disposer le baromètre 9 dans l'enceinte 1.

L'invention peut être appliquée aux taux de fuite faibles et usuels : il suffit d'avoir un cylindre 10 correctement dimensionné par rapport à l'enceinte 1. Si le cylindre 10 est allongé, c'est-à-dire si le diamètre du piston 14 est faible, de petites fuites peuvent correspondre à des déplacements notables du piston 14 et donc être relevées avec précision. Dans de nombreux cas, les mesures peuvent être effectuées rapidement, ce qui permet de négliger les variations de pression extérieure et de température.

On peut finalement constater que le dispositif est de construction simple, robuste et indéréglable, et qu'il peut être appliqué à des enceintes en surpression aussi bien qu'en dépression.

## Revendications

1. Dispositif de mesure du débit de fuite d'une enceinte de confinement (1), caractérisé en ce qu'il comprend une cavité (5) ayant un volume (18) variable et petit par rapport au volume de l'enceinte, la cavité (5) communiquant avec l'enceinte (1) uniquement, ainsi qu'un moyen (37, 38) de mesure du volume de la cavité et enfin un manomètre (3) de mesure d'une différence de pression entre l'enceinte et l'extérieur.

2. Dispositif de mesure du débit de fuite d'une enceinte de confinement suivant la revendication 1, caractérisé premièrement par une cavité qui est délimitée par une paroi cylindrique (10) et par un piston (14) coulissant dans la paroi cylindrique (10), et deuxièmement par un appareil de mesure comprenant une graduation (37) et une jauge (38) solidaires l'un de la paroi cylindrique, l'autre du piston (14).

3. Dispositif de mesure du débit de fuite d'une enceinte de confinement suivant l'une quelconque des revendications 1 ou 2, caractérisé en ce qu'il comprend un dispositif de mesure de pression (9), et un dispositif de mesure de température (8) dans l'enceinte (1).

Office européen
des brevets

**RAPPORT DE RECHERCHE EUROPEENNE**

Numero de la demande

EP 89 40 1003

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,P | EP-A-0 303 303 (PRODUCT SUPPLIERS AG) <br> * figure 5; colonne 6, lignes 36-53 * <br> --- | 1-3 | G 01 M 3/32 <br> G 21 F 7/04 |
| A | EP-A-0 060 548 (SIEMENS AG) <br> * revendications 1-11 * <br> --- | 1,2 | |
| A | US-A-4 635 469 (M.P. MODERA et al.) <br> * revendications 3-15 * <br> --- | 1,2 | |
| A | DE-A-1 773 352 (F. KRUPP GMBH) <br> * pages 2,3 * <br> --- | 1,2 | |
| A | US-A-4 168 621 (H. KREITENBERG) <br> * colonne 1, lignes 58-68; colonne 2, lignes 1-32 * <br> ----- | 2 | |

DOMAINES TECHNIQUES RECHERCHES (Int. Cl.4)

G 01 F 1/00
G 01 F 3/00
G 01 F 5/00
G 01 F 11/00
G 01 F 23/00
G 01 M 3/00
G 21 F 7/00

Le présent rapport a été établi pour toutes les revendications

| Lieu de la recherche | Date d'achèvement de la recherche | Examinateur |
|---|---|---|
| BERLIN | 27-06-1989 | DIETRICH A. |